# EUROPÄISCHE PATENTANMELDUNG

(11) **EP 3 815 814 A1**
(43) Veröffentlichungstag der Anmeldung: **05.05.2021**
(21) Anmeldenummer: 20204092.9
(22) Anmeldetag: 27.10.2020
(51) Int. Cl.: B22D 11/18, B22D 11/20, G01K 1/02, G01K 11/32

(54) **VORRICHTUNG**

(30) Priorität: 30.10.2019 DE 102019216776; 16.12.2019 DE 102019219676; 23.01.2020 DE 102020200818
(71) Anmelder: SMS Group GmbH, 40237 Düsseldorf (DE)
(72) Erfinder: Six, Stephan, 52499 Baesweiler (DE); Krasilnikov, Artemy, 47051 Duisburg (DE); Arzberger, Matthias, 45470 Mülheim a. d. Ruhr (DE)
(74) Vertreter: Klüppel, Walter

(57) **Zusammenfassung**

Die Erfindung betrifft eine Vorrichtung, insbesondere aus einer Anlage einer Hüttenindustrie. Die Vorrichtung umfasst ein Bauteil, beispielsweise eine Kokille mit mindestens einem in dem Bauteil angeordneten Sensor zum Erfassen eines Messsignals. Das Messsignal wird von dem Sensor 120 zu dem optischen Interrogator 140 mit Hilfe eines in oder an dem Bauteil 110 geführten Lichtwellenleiters übertragen. Um die Handhabbarkeit der Vorrichtung unter widrigen Umgebungsbedingungen zu verbessern, ist erfindungsgemäß vorgesehen, dass der optische Interrogator 140 direkt in oder an dem Bauteil 110 montiert ist.

## Beschreibung

Die Erfindung betrifft eine Vorrichtung, insbesondere eine Anlage der Hüttenindustrie, beispielsweise eine Gießanlage.

Derartige Vorrichtungen sind im Stand der Technik grundsätzlich bekannt. So offenbart beispielsweise die internationale Patentanmeldung WO 2011/038875 A1 eine Vorrichtung der Hüttenindustrie mit einer Kokille als Bauteil. In den Seitenwänden der Kokille sind eine Mehrzahl von Glasfaser-Sensoren, basierend auf 1.500-nm-Technologie eingebracht. Dabei handelt es sich um Temperatursensoren zum Erzeugen eines Temperaturmesssignals.

Eine Kokille mit diesen Merkmalen ist auch aus der EP 3 424 614 A1 bekannt. Dort wird das Messsignal über eine kabelgebundene Datenübertragungsstrecke per Lichtwellenleiter an eine Lichtwellenleiter-Auswerteeinheit, einen sogenannten Interrogator übertragen. Aufgrund einer großen zu überbrückenden Entfernung zwischen der Kokille und der Auswerteeinheit ist die Lichtwellenleiterverbindung oftmals gestückelt und die einzelnen Lichtwellenleiterabschnitte werden über Kupplungen miteinander verbunden.

Jede Lichtwellenleiter-Verbindung dämpft das Messsignal und ist sehr empfindlich gegenüber Staub und Verschmutzung. Schon eine Berührung der Steck- bzw. Kupplungskontakte mit bloßen Fingern kann eine Lichtsignalübertragung stark beeinträchtigen. Eine solche Verunreinigung ist nur durch eine aufwändigere Reinigung, die oftmals nicht vor Ort zu realisieren ist, zu beheben. Der Durchmesser des Kerns der eingesetzten Single-Mode-Lichtwellenleiter beträgt typischerweise 9 µm. Aus diesem Grund stellt die präzise Ausrichtung gegenüberliegender bzw. zu kuppelnder Lichtwellenleiter bei jedem Kuppeln einer Lichtwellenleiterverbindung eine große Herausforderung dar. Durch den Einsatz von Linsen-Steckverbindungen ist es zwar möglich, eine gewisse Arbeitsfähigkeit bzw. Funktionsfähigkeit der Übertragungsstrecke aufrecht zu erhalten; diese Linsen-Steckverbindungen sind jedoch sehr kostenintensiv.

Als weitere Nachteile sind zu nennen, dass die Lichtwellenleiter-Steckverbindungen typischerweise nur durch gut geschultes Personal eingerichtet werden können. Insgesamt ist die Lichtwellenleitertechnologie sehr aufwändig in der Wartung der diversen Lichtwellenleiter-Komponenten. Ein Ausfall einer einzelnen Lichtwellenleiter-Verlängerungsstrecke bzw. deren Steckverbindungen kann zum Ausfall des gesamten sicherheitsrelevanten Überwachungssystems des zu überwachenden Bauteils führen. Die Lokalisierung eines Defektes in der Lichtwellenleiter-Übertragungsstrecke ist technisch schwierig und zeitintensiv. Wenn der sehr hochwertige optische Interrogator als Kernkomponente ausfällt oder mit falschen Daten beliefert wird, ist das gesamte Überwachungssystem für das Bauteil ohne Funktion.

Der Erfindung liegt die Aufgabe zugrunde, die Handhabbarkeit der erfindungsgemäßen Vorrichtung auch bei widrigen Umgebungsbedingungen, wie z. B. in einem Stahlwerk, deutlich zu verbessern.

Diese Aufgabe wird durch den Gegenstand des Patentanspruchs 1 gelöst. Dieser ist dadurch gekennzeichnet, dass der optische Interrogator in oder an dem Bauteil montiert ist.

Der Begriff "Bauteil" im Sinne der vorliegenden Erfindung meint in nicht abschließender Aufzählung, lediglich beispielhaft:
- Metallurgische Puffergefäße, wie z.B. Verteilerrinne in Stranggießanlagen
- Metallurgische Transportgefäße, wie z.B. Gießpfannen in Stahl- Werken und -Gießanlagen
- Segment einer Stranggießanlage
- Walzgerüst einer Walzstraße
- Rollen zum Transport eines Produktes oder Walzen zum Umformen des Produktes.

Ein optischer Interrogator ist ein optoelektronisches Instrument, mit dem die Wellenlängen des von den optischen Sensoren reflektierten Lichts von den Bragg-Gitter-Sensoren (FBG) ausgelesen werden können. Optional kann die Messeinheit ein optoelektronisches Instrument darstellen, welches die natürliche Rückstreuung (Rayleigh, Brillouin, Raman) an Partikeln innerhalb eines Lichtwellensensors ausließt.

Durch die erfindungsgemäß beanspruchte Anordnung des optischen Interrogators, auch Interrogator genannt, entfällt die im Stand der Technik noch vorgesehene Lichtwellenleiterverbindung außerhalb des Bauteils, gegebenenfalls inklusive benötigter Steckverbindungen/Zwischenkupplungen zur Verlängerung der Lichtwellenleiter. Die staub- und schmutzempfindlichen Lichtwellenleiterkabel müssen nun nicht mehr in der stark verschmutzten Umgebung des Bauteils gekoppelt werden. Dadurch entfallen einerseits die im Stand der Technik teilweise verwendeten hochpreisigen Lichtwellenleiterkabel und andererseits auch Spezialstecker, insbesondere sogenannte Linsenstecker. Die Lebensdauer des Bauteils und der gesamten Vorrichtung werden erhöht; die Zuverlässigkeit und Stabilität des Betriebs der Vorrichtung kann so besser gewährleistet werden. Außerdem bietet sich der Vorteil, dass eine Fehlersuche - sofern überhaupt noch erforderlich - deutlich vereinfacht wird, weil viele im Stand der Technik noch vorhandene Fehlerquellen wegfallen.

Es wird eine ortsunabhängige Signalprüfung möglich: Durch die erfindungsgemäß beanspruchte dezentrale Anordnung des optischen Interrogators kann es auch empfehlenswert sein, das gesamte Bauteil zusammen mit dem optischen Interrogator auszubauen und durch ein gleichartiges intaktes Bauteil mit ebenfalls angeordnetem neuem optischen Interrogator zu ersetzen. Dadurch können längere Reparaturzeiten abseits der Vorrichtung durchgeführt werden, ohne dass der Betrieb der gesamten Vorrichtung so lange ruhen müsste.

Gemäß einem ersten Ausführungsbeispiel der Erfindung sind die Lichtwellenleiter und der optische Interrogator in <1400-nm-Technologie ausgebildet. Die Komponenten dieser Lichtwellenleitertechnik, insbesondere auch die Komponenten der <1100-nm-Technologie oder der <900-nm-Technologie, bauen vorteilhafterweise deutlich kleiner als z. B. die Komponenten der 1.500-nm-Technologie und darüber hinaus sind diese <1400-nm-Komponenten auch noch preiswerter. Aufgrund der kompakteren Bauweise eigenen sich insbesondere die Komponenten der <900-nm-Lichtwellenleitertechnik besonders gut für die Montage des optischen Interrogators an oder in dem Bauteil.

Gemäß einem weiteren Ausführungsbeispiel der Erfindung ist zwischen dem optischen Interrogator und einem fernab des Bauteils positionierten Computer eine klassische kabelgebundene oder drahtlose Datenübertragungsstrecke vorgesehen. Der Begriff "kabelgebunden" schließt bei der vorliegenden Erfindung eine Lichtwellenleiterverbindung ausdrücklich aus. Die Datenübertragungsstrecke kann ausgebildet sein in Form einer elektrischen Kabelverbindung, konkret z. B. einer Power-over-Ethernet POE-, USB-, -Ethernet-, Ethercat- oder Koaxialkabel-Verbindung. Alternativ kann die Datenübertragungsstrecke ausgebildet sein in Form einer drahtlosen Übertragungsstrecke, z. B. in Form einer WLAN-, Bluetooth- oder ZigBee-Verbindung. Diese bewährten (Steck-)Verbindungen erlauben eine deutlich robustere Handhabung als Lichtwellenleiter-Verbindungen, insbesondere sind sie staubunempfindlich. Neben einer Datenübermittlung ermöglichen sie vorzugsweise auch eine Stromversorgung. Die Wartung der Vorrichtung insgesamt wird durch die Verwendung der bewährten (Steck-) Verbindungen - auch wenn daneben teilweise Lichtwellenleiter in oder an dem Bauteil angeordnet sind - deutlich vereinfacht. Auch besteht jetzt die Möglichkeit, das Bauteil zusammen mit dem daran montierten optischen Interrogator in die Vorrichtung einzusetzen oder aus der Vorrichtung auszubauen; die Zuordnung der spezifischen Auswerteeinheit mit dem Bauteil bleibt auf diese Weise gewährleistet.

Der Begriff "Computer" meint bei der vorliegenden Erfindung eine Recheneinheit zur Datenaufzeichnung und zur Steuerung der (gesamten) Vorrichtung mit folgenden Funktionen:
1. Signalverarbeitung: der Computer wandelt die vom Interrogator gemessenen Wellenlängen in technische Einheiten: beispielsweise Temperatur in Grad Celsius um.
   Des Weiteren kann enthalten sein
2. Datenerfassung: der Computer zeichnet den zeitlichen Verlauf der Signale zur Archivierung, Analyse oder zum Export über eine Softwareschnittstelle auf.
3. Betreiben der Modelle: der Computer betreibt basierend auf den Temperatursignalen und ggf. zusätzlichen Prozesssignalen mathematische Modelle und numerische Algorithmen für das bessere Anlagenzustand- und Prozessverständnis.
4. Steuerung und/oder Regeln der Anlage: der Computer sendet Steuersignale an die Automationssysteme: Messsysteme (zum Beispiel für die Temperaturkompensation), Steuersysteme (zum Beispiel Prozessabbruch aus Anlagensicherheitsgründen) und Planungssysteme (zum Beispiel Schnittoptimierung und damit zusammenhängende Auftragsplanung)

Der Computer kann auch - alternativ zu einer Anordnung fernab des Bauteils - in oder an dem Bauteil montiert sind. Dies kann separat benachbart zu dem optischen Interrogator erfolgen oder der optische Interrogator und der Computer bilden zusammen eine integrierte elektronische Mess - und -Recheneinheit, die in oder an dem Bauteil montiert ist. Der optische Interrogator und der Computer sind vorzugsweise 4G fähig, besser noch 5G fähig ausgebildet.

Weitere vorteilhafte Ausgestaltungen der Vorrichtung sind Gegenstand der abhängigen Ansprüche.

Der Beschreibung sind zwei Figuren beigefügt, welche die Vorrichtung in ihrem Aufbau in Form von Ausführungsbeispielen detailliert zeigen.
- Figur 1: zeigt die erfindungsgemäße Vorrichtung mit dem Computer angeordnet fernab des Bauteils; und
- Figur 2: zeigt die erfindungsgemäße Vorrichtung mit dem Computer angeordnet in oder an dem Bauteil, vorzugsweise integriert zusammen mit dem optischer Interrogator.

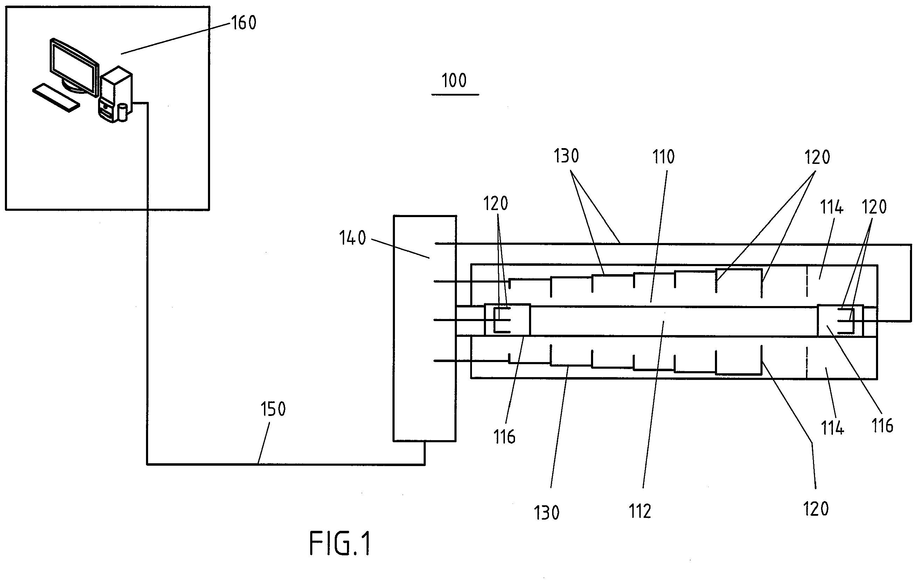

Konkret zeigt die Figur 1 die erfindungsgemäße Vorrichtung 100 mit einer Kokille 110 als beispielhaftem Bauteil aus der Hüttenindustrie. Eine Kokille dient zum Gießen von Metall in ihrem Kokillenhohlraum 112. Der Kokillenhohlraum 112 wird von zwei gegenüberliegenden Breitseitenwänden 114 und zwei dazwischen angeordneten Schmalseitenwänden 116 der Kokille aufgespannt. In oder an zumindest einer dieser Seitenwände, vorzugsweise jedoch in oder an allen diesen Seitenwänden, sind Sensoren 120, beispielsweise Temperatursensoren angebracht, die jeweils ein Messsignal erzeugen. Das Messsignal wird mit Hilfe eines Lichtwellenleiters 130 innerhalb oder an der Kokille an einen optischen Interrogator 140 übertragen, welcher erfindungsgemäß ebenfalls in oder an der Kokille 110 montiert ist. Zwischen den Sensoren 120 und dem optischen Interrogator 140 sind gemäß einem bevorzugten Ausführungsbeispiel keine Zwischenkupplungen zur Verbindung zweier Lichtwellenleiterabschnitten vorgesehen; d. h. die Sensoren werden unmittelbar, typischerweise mit Hilfe von Anschlusssteckern, an den optischen Interrogator angeschlossen. Die Montage der Lichtwellenleiter und des optischen Interrogators direkt in oder an dem Bauteil bzw. der Kokille bietet den Vorteil, dass die einleitend beschriebenen Probleme beim Zusammenstecken einzelner Lichtwellenleiter-Teilstücke entfallen. Weiterhin bietet die beanspruchte Ausgestaltung der Vorrichtung, d. h. die nunmehr beanspruchte autarke Signalverarbeitung der Sensor-Messsignale direkt auf der Kokille einen ortsunabhängigen Signalcheck, während einer Wartung der Vorrichtung bzw. des Bauteils in einer Werkstatt, auf einem Kokillenbereitstellungsstand, auf einer Gießbühne oder in einer Stranggießanlage.

Zwischen dem optischen Interrogator 140 und einem beispielsweise fernab des Bauteils bzw. der Kokille 110 positionierten Computer 160 wird erfindungsgemäß eine bewährte kabelgebundene oder drahtlose Datenübertragungsstrecke, z. B. in Form einer PoE-Ethernet-, USB-, Koaxialkabel-, WLAN-, Bluetooth- oder ZigBee-Verbindung eingerichtet. Für den Betrieb der erfindungsgemäßen Vorrichtung sind die damit realisierbaren Datenübertragungskapazitäten völlig ausreichend, denn auf dieser Übertragungsstrecke muss nicht die große Menge der Messdaten, wie sie von den Sensoren generiert wird, sondern nur eine in der Regel deutlich kleinere Menge an Auswertedaten, generiert von dem optischen Interrogator, übertragen werden. Bei Havarien ist es dann nur noch erforderlich, kostengünstige Elektrokomponenten der Datenübertragungsstrecke und keine teuren optischen Komponenten ersetzen zu müssen.

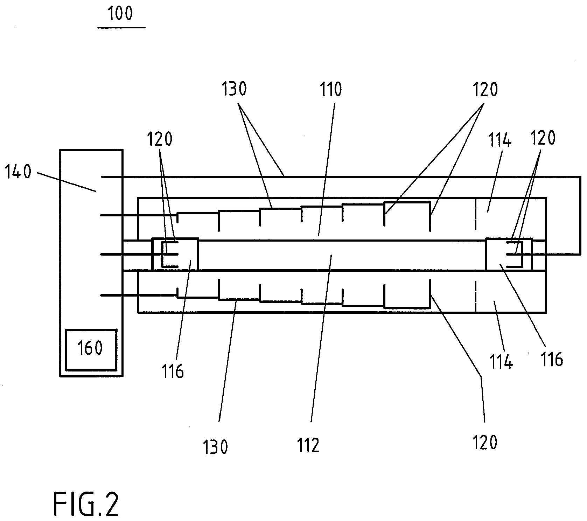

Alternativ kann der Computer 160 auch zusammen mit dem optischen Interrogator in eine Mess- und Recheneinheit integriert sein; siehe Figur 2. Dann kann die externe Datenübertragungsstrecke 150 entfallen. Die Mess- und Recheneinheit ist vorzugsweise in oder an dem Bauteil montiert.

Weitere Vorteile dieser bewährten Technologie wurden oben beschrieben. Die besagte Datenübertragungsstrecke 150 kann weiterhin ausgebildet sein, ebenfalls eine Stromversorgung für den optischen Interrogator 140 mit zu umfassen, z. B. in Form der besagten PoE-Verbindung. Die Sensoren 120 können separat als einzelne Bauteile ausgebildet sein; besonders vorteilhaft ist jedoch deren Ausbildung als sogenannte Glasfaser-Sensoren; die Lichtwellenleiter 130 selber sind dann als z. B. Temperatursensoren ausgebildet bzw. ihre Signale werden entsprechend ausgewertet. In diesem Fall sind keine separaten Sensoren, insbesondere keine separaten Temperatursensoren erforderlich.

Gemäß einem weiteren Ausführungsbeispiel handelt es sich bei dem erfindungsgemäßen Bauteil um ein Segment in einer Strangführung einer Gießanlage. Die Strangführung ist typischerweise einer Kokille in Gießrichtung nachgeordnet zum Umlenken eines in der Kokille gegossenen Gießstrangs aus Metall aus der Vertikalen in die Horizontale. Der Gießstrang ist typischerweise aus einer Mehrzahl von hintereinander angeordneten Segmenten aufgebaut, welche einzeln aus der Strangführung entfernbar sind. Jedes Segment besteht typischerweise aus einem Oberrahmen und einem Unterrahmen, an denen jeweils eine Mehrzahl von Strangführungsrollen zum Führen des gegossenen Gießstrangs drehbar gelagert sind. Die Strangführungsrollen des Oberrahmens und die Strangführungsrollen des Unterrahmens sind gegenüberliegend beabstandet zueinander angeordnet und spannen auf diese Weise einen Führungskanal für den Gießstrang auf. Der Oberrahmen und der Unterrahmen sind typischerweise über Klammern oder Hydraulikzylinder mechanisch miteinander verbunden. Erfindungsgemäß können Sensoren, beispielsweise Temperatursensoren an dem Oberrahmen und/oder dem Unterrahmen angeordnet sein. Die Sensoren können beispielsweise zwischen zwei in Gießrichtung benachbarten Strangführungsrollen angeordnet sein zum Erfassen der Temperatur des durch den Führungskanal geführten Gießstrangs. Die Sensoren können auch in den Lagern der Strangführungsrollen angeordnet sein zum Messen von deren Temperatur. Auch bei diesem Ausführungsbeispiel könnten so die Sensoren über Lichtwellenleiter an den optischen Interrogator angekoppelt sein. Der optische Interrogator 140 kann entweder alleine oder zusammen mit dem Computer 160 in oder an dem Segment als Bauteil, vorzugsweise in oder an dem Oberrahmen und/oder Unterrahmen angeordnet sein. Die Vorteile dieser Anordnung entsprechen den oben mit Bezug auf die Kokille als Bauteil genannten Vorteilen.

### Bezugszeichenliste

- 100: Vorrichtung
- 110: Bauteil, beispielsweise Kokille
- 112: Kokillenhohlraum
- 114: Breiseitenwand der Kokille
- 116: Schmalseitenwald der Kokille
- 120: Sensor
- 130: Lichtwellenleiter
- 140: optischer Interrogator
- 150: Datenübertragungsstrecke
- 160: Computer

## Patentansprüche

1. Vorrichtung (100), insbesondere einer Anlage der Hüttenindustrie, aufweisend:
mindestens ein Bauteil (110);
mindestens einen in oder an dem Bauteil (110) angeordneten Sensor (120) zum Erzeugen eines Messsignals;
mindestens einen in oder an dem Bauteil (110) geführten Lichtwellenleiter (130) zum Übertragen des Messsignals an einen optischen Interrogator (140);
**dadurch gekennzeichnet,**
**dass** der optische Interrogator (140) in oder an dem Bauteil (110) montiert ist.

2. Vorrichtung (100) nach Anspruch 1,
**dadurch gekennzeichnet,**
**dass** der Lichtwellenleiter (130) und der optische Interrogator (140) in <1400nm Technologie, vorzugsweise in <1100-nm-Technologie, weiter vorzugsweise in <900-nm-Technologie ausgebildet sind.

3. Vorrichtung (100) nach einem der vorangegangenen Ansprüche,
**gekennzeichnet durch**
eine kabelgebundene oder drahtlose Datenübertragungsstrecke (150) zwischen dem optischen Interrogator (140) und einem fernab des Bauteils oder ebenfalls in oder an dem Bauteil (110) positionierten Computer (160), wobei die kabelgebundene Datenübertragungsstrecke (150) beispielsweise ausgebildet ist als Ethernet-, USB- oder Koaxialkabel-Verbindung und wobei die drahtlose Datenübertragungsstrecke beispielsweise ausgebildet ist als WLAN, Bluetooth- oder ZigBee-Verbindung.

4. Vorrichtung (100) nach Anspruch 3,
**dadurch gekennzeichnet,**
**dass** die Datenübertragungsstrecke (150) ebenfalls eine Stromversorgung für den optischen Interrogator (140) und/oder den Computer mit umfasst.

5. Vorrichtung (100) nach einem der Ansprüche 3 oder 4,
**dadurch gekennzeichnet,**
**dass** der optische Interrogator (140) und der Computer (160) in einer Mess- und Recheneinheit zusammengefasst sind und die Mess- und Recheneinheit in oder an dem Bauteil montiert ist.

6. Vorrichtung (100) nach Anspruch 4 oder 5,
**dadurch gekennzeichnet,**
**dass** die Stromversorgung für den optischen Interrogator (140) und/oder den Computer und/oder die Mess- und Recheneinheit auf der Vorrichtung (100) zugeführt ist.

7. Vorrichtung (100) nach einem der vorangegangenen Ansprüche,
**dadurch gekennzeichnet,**
**dass** es sich bei dem Sensor (120) um einen Temperatursensor handelt, wobei das Messsignal die Temperatur am Ort des Sensors repräsentiert.

8. Vorrichtung (100) nach einem der vorangegangenen Ansprüche,
**dadurch gekennzeichnet,**
**dass** der Sensor (120) in dem Lichtwellenleiter integriert ist, z.B. in Form von Glasfasersensoren.

9. Vorrichtung (100) nach einem der vorangegangenen Ansprüche,
**dadurch gekennzeichnet,**
**dass** der Lichtwellenleiter (130) zwischen dem Sensor (120) und dem optischen Interrogator (140) ohne Zwischenkupplung ausgebildet ist.

10. Vorrichtung (100) nach einem der vorangegangenen Ansprüche,
**dadurch gekennzeichnet,**
**dass** es sich bei dem Bauteil (110) um eine Kokille, beispielsweise mit Breit- und Schmalseitenwänden (114, 116) zum Gießen von Metallen in einer Gießanlage handelt.

11. Vorrichtung (100) nach Anspruch 10,
**dadurch gekennzeichnet,**
**dass** der mindestens eine Sensor (120) in oder an mindestens einer der beiden gegenüberliegenden Breitseitenwände (114) und/oder in oder an mindestens einer der beiden gegenüberliegenden Schmalseitenwände (116) der Kokille angeordnet ist.

12. Vorrichtung (100) nach einem der Ansprüche 1 bis 9,
**dadurch gekennzeichnet,**
**dass** es sich bei dem Bauteil (110) um ein Segment einer Strangführung in einer Gießanlage zum Gießen von Metallen handelt, wobei das Segment aus einem mechanisch gekoppelten Oberrahmen und Unterrahmen besteht.

13. Vorrichtung (100) nach Anspruch 12,
**dadurch gekennzeichnet,**
**dass** der mindestens eine Sensor (120) in oder an dem Oberrahmen und/oder dem Unterrahmen des Strangführungssegmentes angeordnet ist.
